(19) **Europäisches Patentamt / European Patent Office / Office européen des brevets**

(11) **EP 4 738 117 A1**

(12) **EUROPEAN PATENT APPLICATION**
published in accordance with Art. 153(4) EPC

(43) Date of publication:
06.05.2026 Bulletin 2026/19

(21) Application number: 24847576.6

(22) Date of filing: 13.03.2024

(51) International Patent Classification (IPC):
*G06F 9/50* (2006.01)     *G06N 20/00* (2019.01)
*H04L 67/10* (2022.01)     *H04L 69/14* (2022.01)

(52) Cooperative Patent Classification (CPC):
H04L 67/10; G06F 9/50; G06N 20/00; H04L 69/14;
H04W 8/26; H04W 28/08

(86) International application number:
PCT/CN2024/081302

(87) International publication number:
WO 2025/025610 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 CN 202310957997

(71) Applicant: Huawei Technologies Co., Ltd.
Shenzhen, Guangdong 518129 (CN)

(72) Inventors:
• CAI, Xin
  Shenzhen, Guangdong 518129 (CN)
• HUANG, Zhiyuan
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **COMMUNICATION METHOD AND RELATED DEVICE**

(57) This application provides a communication method and a related device, applied to the communication field. The method includes: obtaining a first sequence number of a first network interface card in a server and a second sequence number of the first network interface card on a communication plane; computing a phase deflection value of the communication plane based on the first sequence number; computing a first communication partner sequence number based on the second sequence number, where the first communication partner sequence number is a sequence number, on the communication plane, of a communication object of the first network interface card in a $K^{th}$ step, and the first communication partner sequence number corresponds to a second network interface card; combining the first communication partner sequence number with the phase deflection value, to obtain a second communication partner sequence number, where the second communication partner sequence number is a sequence number of a third network interface card on the communication plane; and replacing the second network interface card with the third network interface card as the communication object of the first network interface card in the $K^{th}$ step. In this application, a process of constructing phase deflection of communication traffic is introduced, so that a phase difference is generated between inter-node traffic on different communication planes, thereby balancing traffic on an entire network, and improving communication performance.

EP 4 738 117 A1

Obtain a first sequence number of a first network interface card ⟍ 201

Obtain a second sequence number of the first network interface card ⟍ 202

Compute a phase deflection value of a target communication plane ⟍ 203

Compute a first communication partner sequence number, where the first communication partner sequence number is a sequence number, on the target communication plane, of a communication object of the first network interface card in a $K^{th}$ step, and the first communication partner sequence number corresponds to a second network interface card ⟍ 204

Obtain a second communication partner sequence number based on the phase deflection value and the first communication partner sequence number, where the second communication partner sequence number is a sequence number of a third network interface card on the target communication plane ⟍ 205

Replace the second network interface card with the third network interface card as the communication object of the first network interface card in the $K^{th}$ step ⟍ 206

FIG. 2

**Description**

This application claims priority to Chinese Patent Application No. CN202310957997.9, filed with the China National Intellectual Property Administration on July 31, 2023 and entitled "COMMUNICATION METHOD AND RELATED DEVICE", which is incorporated herein by reference in its entirety.

**TECHNICAL FIELD**

This application relates to the field of communication technologies, and in particular, to a communication method and a related device.

**BACKGROUND**

In an AI scenario, a computing volume is increasing, and a requirement on a computing cluster networking scale is also increasing. Currently, a fat-tree (fat-tree) topology is the mainstream computing networking form in the market. However, when the fat-tree is applied to an ultra-large-scale networking solution, a quantity of fat-tree layers increases. In other words, a large quantity of switches for communication at a core layer need to be added, resulting in high networking costs. In an ultra-large-scale networking scenario, mesh (Mesh) networking has far better scalability and lower networking costs than the fat-tree. Therefore, the mesh networking is an effective alternative.

The mesh networking is a type of networking with a mesh-like networking topology, including full mesh (Full Mesh) networking and dragonfly (Dragonfly) networking. In actual application, it is found that in a case of parallel communication of a plurality of network interface cards, symmetric collective communication exhibits longer communication duration in the mesh networking than in the fat-tree topology. For example, it is found, through actual tests, that compared with a fat-tree topology with 8 servers and 64 network interface cards (each server has 8 interface cards), in dragonfly networking of a same scale, communication duration of an all-reduce (all-reduce) operator in the symmetric collective communication increases by more than 50% and communication duration of an all-to-all (All-to-all) operator in the symmetric collective communication increases by more than 100%.

It can be learned that, in a mesh networking scenario, performance of the symmetric collective communication deteriorates severely, and an innovative solution for improvement is urgently needed.

**SUMMARY**

This application provides a communication method and a related device. This can reduce a probability of inter-node link congestion and improve communication performance.

According to a first aspect of this application, a communication method is provided, and may be applied to a communication device. The method includes: obtaining a first sequence number, where the first sequence number is a sequence number of a first network interface card in a target server, the target server includes N network interface cards, each of the N network interface cards corresponds to a communication plane, the first network interface card corresponds to a target communication plane, the target communication plane includes M network interface cards, the M network interface cards belong to different servers, sequence numbers of the M network interface cards in respective servers are the same as the first sequence number, the M network interface cards communicate with each other based on a target communication algorithm, and the target communication algorithm includes a plurality of steps; obtaining a second sequence number, where the second sequence number is a sequence number of the first network interface card on the target communication plane; computing a phase deflection value of the target communication plane based on the first sequence number, a quantity of network interface cards included in the target server, and a quantity of network interface cards included on the target communication plane; computing a first communication partner sequence number based on the second sequence number, where the first communication partner sequence number is a sequence number, on the target communication plane, of a communication object of the first network interface card in a $K^{th}$ step, and the first communication partner sequence number corresponds to a second network interface card; combining the first communication partner sequence number with the phase deflection value, to obtain a second communication partner sequence number, where the second communication partner sequence number is a sequence number of a third network interface card on the target communication plane; and replacing the second network interface card with the third network interface card as the communication object of the first network interface card in the $K^{th}$ step.

The N network interface cards of the target server each correspond to one communication plane. Therefore, the quantity of network interface cards included in the target server is a quantity of communication planes. A plurality of communication planes may perform parallel communication.

The first network interface card corresponds to the target communication plane. The sequence numbers, in respective servers, of the network interface cards on the target communication plane are the same as the first sequence number. The first sequence number is a sequence number of the target communication plane. Network interface cards on a same communication plane may communicate with each other. There are a plurality of target communication algorithms used for communication, and different communication algorithms include different quantities of steps.

In the first aspect of this application, a phase deflection value of a communication plane is computed based on a quantity of network interface cards on the communication plane, a total quantity of communication planes, and a sequence number of the communication plane, and then a communication object of a network interface card is recomputed based on the phase deflection value of the communication plane, to generate a phase difference of traffic between two nodes on different communication planes. In this way, traffic on an entire network is balanced, bandwidth load of a single link is reduced, bandwidth utilization of the entire network is improved, congestion generation probability is reduced, and communication performance is improved.

In a possible implementation of the first aspect, the target communication algorithm is a halving-doubling algorithm, and the plurality of steps are $\log_2 M$ steps.

In the possible implementation, the target communication algorithm is limited to the halving-doubling algorithm. This improves practicability of the solution.

In a possible implementation of the first aspect, before the foregoing procedure of obtaining a first sequence number, the method further includes: performing collective communication on the N network interface cards by using a reduce-scatter operator. After the foregoing procedure of replacing the second network interface card with the third network interface card as the communication object of the first network interface card in the $K^{th}$ step, the method further includes: performing collective communication on the N network interface cards by using an all-gather operator.

If the target communication algorithm is the halving-doubling algorithm, before inter-node communication is performed, the reduce-scatter operator needs to be first used to perform the collective communication on the network interface cards in the target server. In the end of a communication process, the all-gather operator needs to be used to perform the collective communication on the network interface cards in the target server.

In a possible implementation of the first aspect, the foregoing procedure of computing a first communication partner sequence number based on the second sequence number includes: performing computation according to the following formula: First communication partner sequence number = Second sequence number ^ (1 << ((K + First sequence number) % $\log_2 M$)), where ^ represents a bitwise exclusive OR operation, << represents a left shift operation, and % represents a modulo operation.

When the target communication algorithm is the halving-doubling algorithm, a total quantity of steps is $\log_2 M$ steps, where M is the quantity of network interface cards included on the target communication plane. Then, the first communication partner sequence number is computed based on the first sequence number of the first network interface card on the target server, the second sequence number of the first network interface card on the target communication plane, the quantity K of steps, and the total quantity of steps.

In the possible implementation, the manner for computing the first communication partner sequence number is limited. This improves the practicability of the solution.

In a possible implementation of the first aspect, the target communication algorithm is a pairwise algorithm, and the plurality of steps are M-1 steps.

In the possible implementation, the target communication algorithm is limited to the pairwise algorithm. This extends an application scenario of the solution, and improves the practicability of the solution.

In a possible implementation of the first aspect, before the foregoing procedure of obtaining a first sequence number, the method further includes: performing collective communication on the N network interface cards by using an all-to-all operator.

If the target communication algorithm is the pairwise algorithm, before the inter-node communication is performed, the all-to-all operator needs to be first used to perform the collective communication on the network interface cards in the target server.

In a possible implementation of the first aspect, the first communication partner sequence number includes a third communication partner sequence number and a fourth communication partner sequence number. The foregoing procedure of computing a first communication partner sequence number based on the second sequence number includes: computing the third communication partner sequence number and the fourth communication partner sequence number based on the second sequence number, where the third communication partner sequence number and the fourth communication partner sequence number are computed according to the following formulas: Third communication partner sequence number = (Second sequence number + M-K) % M, and Fourth communication partner sequence number = (Second sequence number + K) % M, where % represents modulo.

When the target communication algorithm is the pairwise algorithm, steps of the total quantity are M-1 steps. In the pairwise algorithm, the first network interface card has two communication objects in each step. Therefore, there are two communication partner sequence numbers: the third communication partner sequence number and the fourth communication partner sequence number. Then, the third communication partner sequence number and the fourth communication partner sequence number are computed based on the second sequence number of the first network interface card on the target communication plane, the quantity of network interface cards included on the target communication plane, and the quantity K of steps.

In the possible implementation, the manner for computing the first communication partner sequence number is limited. This improves the practicability of the solution.

According to a second aspect of this application, a communication device is provided, and includes an obtaining unit, a computation unit, a combination unit, and a replacement unit. The obtaining unit is configured to obtain a first sequence number, where the first sequence number is a sequence number of a first network interface card in a target server, the target server includes N network interface cards, each of the N network interface cards corresponds to a communication plane, the first network interface card corresponds to a target communication plane, the target communication plane includes M network interface cards, the M network interface cards belong to different servers, sequence numbers of the M network interface cards in respective servers are the same as the first sequence number, the M network interface cards communicate with each other based on a target communication algorithm, and the target communication algorithm includes a plurality of steps. The obtaining unit is further configured to obtain a second sequence number, where the second sequence number is a sequence number of the first network interface card on the target communication plane. The computation unit is configured to compute a phase deflection value of the target communication plane based on the first sequence number, a quantity of network interface cards included in the target server, and a quantity of network interface cards included on the target communication plane. The computation unit is further configured to compute a first communication partner sequence number based on the second sequence number, where the first communication partner sequence number is a sequence number, on the target communication plane, of a communication object of the first network interface card in a $K^{th}$ step, and the first communication partner sequence number corresponds to a second network interface card. The combination unit is configured to combine the first communication partner sequence number with the phase deflection value, to obtain a second communication partner sequence number, where the second communication partner sequence number is a sequence number of a third network interface card on the target communication plane. The replacement unit is configured to replace the second network interface card with the third network interface card as the communication object of the first network interface card in the $K^{th}$ step.

In a possible implementation of the second aspect, the target communication algorithm is a halving-doubling algorithm, and the plurality of steps are $\log_2 M$ steps.

In a possible implementation of the second aspect, the communication device further includes a communication unit, configured to perform collective communication on the N network interface cards by using a reduce-scatter operator. The communication unit is further configured to perform collective communication on the N network interface cards by using an all-gather operator.

In a possible implementation of the second aspect, the computation unit is specifically configured to compute the first communication partner sequence number according to the following formula: First communication partner sequence number = Second sequence number ^ (1 << ((K + First sequence number) % $\log_2 M$)), where ^ represents a bitwise exclusive OR operation, << represents a left shift operation, and % represents a modulo operation.

In a possible implementation of the second aspect, the target communication algorithm is a pairwise algorithm, and the plurality of steps are M-1 steps.

In a possible implementation of the second aspect, the communication unit is further configured to perform collective communication on the N network interface cards by using an all-to-all operator.

In a possible implementation of the second aspect, the first communication partner sequence number includes a third communication partner sequence number and a fourth communication partner sequence number. The computation unit is specifically configured to compute the third communication partner sequence number and the fourth communication partner sequence number based on the second sequence number. The third communication partner sequence number and the fourth communication partner sequence number are computed according to the following formulas: Third communication partner sequence number = (Second sequence number + M-K) % M, and Fourth communication partner sequence number = (Second sequence number + K) % M, where % represents modulo.

The communication device provided in the second aspect of this application is configured to perform the method according to the first aspect or any possible implementation of the first aspect.

According to a third aspect of this application, a communication device is provided, and includes a processor and a memory. The memory is configured to store instructions. The processor is configured to obtain the instructions stored in the memory, to perform the method according to the first aspect or any possible implementation of the first aspect.

According to a fourth aspect of this application, a computer-readable storage medium is provided. The computer-readable storage medium includes instructions. When the instructions are run on a computer, the computer is enabled to perform the method according to the first aspect or any possible implementation of the first aspect.

According to a fifth aspect of this application, a computer program product including instructions is provided. When the computer program product runs on a computer, the computer is enabled to perform the method according to the first aspect or any possible implementation of the first aspect.

According to a sixth aspect of this application, a chip system is provided. The chip system includes at least one processor and a communication interface. The communication interface and the at least one processor are interconnected through a line, and the at least one processor is configured to run a computer program or instructions, to perform the method according to the first aspect or any possible implementation of the first aspect.

**BRIEF DESCRIPTION OF DRAWINGS**

FIG. 1a is a diagram of an architecture of a communication system to which an embodiment of this application is applicable;
FIG. 1b is a diagram of another architecture of a communication system to which an embodiment of this application is applicable;
FIG. 2 is a diagram of an embodiment of a communication method according to an embodiment of this application;
FIG. 3 is a diagram of another embodiment of a communication method according to an embodiment of this application;
FIG. 4a is a diagram of a communication traffic feature according to an embodiment of this application;
FIG. 4b is another diagram of a communication traffic feature according to an embodiment of this application;
FIG. 5 is a diagram of another embodiment of a communication method according to an embodiment of this application;
FIG. 6a is another diagram of a communication traffic feature according to an embodiment of this application;
FIG. 6b is another diagram of a communication traffic feature according to an embodiment of this application;
FIG. 7 is a diagram of a structure of a communication device according to an embodiment of this application; and
FIG. 8 is a diagram of another structure of a communication device according to an embodiment of this application.

**DESCRIPTION OF EMBODIMENTS**

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.
The terms "system" and "network" in the specification, claims, and accompanying drawings of this application may be used interchangeably. Unless otherwise specified, ordinal numbers such as "first" and "second" are used to distinguish between a plurality of objects, and are not intended to limit a sequence, a time sequence, priorities, or importance degrees of the plurality of objects. It should be understood that the terminology termed in such a way are interchangeable in proper circumstances so that embodiments described herein can be implemented in other orders than the order illustrated or described herein. Moreover, the terms "include", "have" and any other variants mean to cover the non-exclusive inclusion, for example, a process, method, system, product, or device that includes a list of procedures or units is not necessarily limited to those expressly listed steps or units, but may include other procedures or units not expressly listed or inherent to such a process, method, product, or device.
For ease of understanding, main related terms and concepts in embodiments of this application are first described below.

1. Mesh networking

The mesh networking is a general name of a networking type with a mesh-like networking topology. The mesh networking includes full mesh networking and dragonfly networking.

2. Collective communication

The collective communication (Collective Communication) refers to a global communication operation in which all processes in a process group participate.

3. Symmetric collective communication

The symmetric collective communication is a collective communication type characterized by the following: All processes have equivalent communication purposes and communication behaviors, and are not classified into primary or secondary processes. Typical symmetric collective communication includes all-reduce communication, all-to-all communication, all-gather (All-Gather) communication, reduce-scatter (Reduce-Scatter) communication, and the like.

4. In-phase superposition

When a plurality of pieces of same communication traffic are superposed, a feature of larger traffic in time domain features of the pieces of communication traffic causes larger traffic due to amplitude superposition at a same moment. In other words, in-phase superposition occurs on the plurality of pieces of same communication traffic.

5. Phase deflection

A deflection factor is added to a communication algorithm, so that time domain features of a plurality of pieces of communication traffic in the communication algorithm change in phase. In other words, the communication traffic features have consistent sequences and intervals, but different start points. If the time domain features of the communication traffic are drawn into a graph with time as the horizontal axis and communication traffic as the vertical axis, a phase difference is generated between features in a similar way to a waveform graph. This phenomenon is referred to as a phase deflection generated on the time domain features of the plurality of pieces of communication traffic.

An embodiment of this application provides a communication method that can reduce a probability of inter-node communication link congestion, and reduce a communication latency. An embodiment of this application further provides a related apparatus, a computer-readable storage medium, a computer program product, and the like. Descriptions are provided below separately.

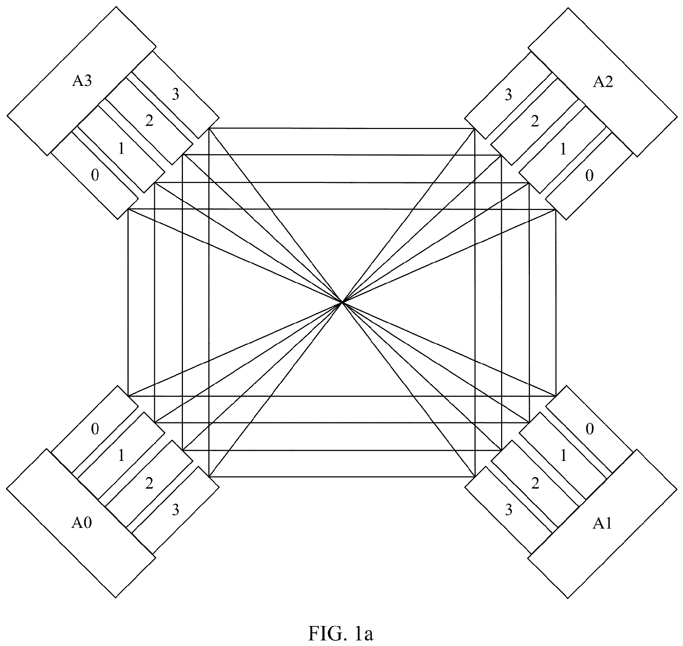

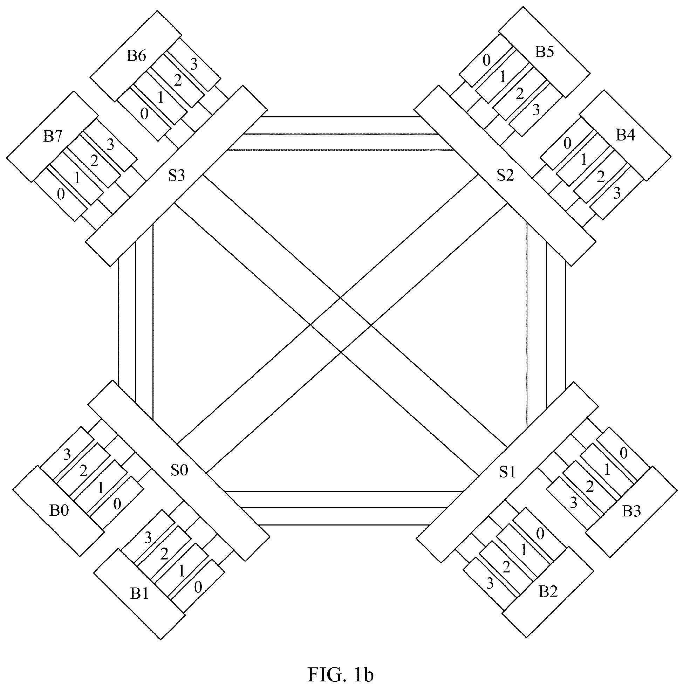

FIG. 1a and FIG. 1b are diagrams of architectures of communication systems to which an embodiment of this application is applicable.

The present invention may be applied to a scenario in which intra-node communication and inter-node communication are separately performed when symmetric collective communication is performed provided that a plurality of network communication planes are in parallel in a mesh networking topology. Detailed descriptions are as follows.

FIG. 1a and FIG. 1b are both mesh networking scenarios. FIG. 1a shows a communication system in a full mesh networking architecture. As shown in FIG. 1a, the communication system includes four servers: A0, A1, A2, and A3. Each server includes four network interface cards, and numbers of the network interface cards in the server are 0 to 3. FIG. 1b shows a communication system in a dragonfly networking architecture. As shown in FIG. 1b, the communication system includes eight servers: B0 to B7. B0 and B1 are connected to a switch S0. B2 and B3 are connected to a switch S1. B4 and B5 are connected to a switch S2. B6 and B7 are connected to a switch S3. Each server has four network interface cards. Numbers of the network interface cards in the server are 0 to 3.

One server is one node. A plurality of network interface cards in the server may perform inter-node communication through intra-node interconnection. For example, for the server A0, four network interface cards in the A0 may communicate with each other. Network interface cards with a same number and in servers may perform inter-node communication. The network interface cards with the same number form a communication plane. For example, for the communication system shown in FIG. 1a, a network interface card 1 in the A0, a network interface card 1 in the A1, a network interface card 1 in the A2, and a network interface card 1 in the A3 form a communication plane. Network interface cards on a same communication plane may communicate with each other. In full mesh networking, network interface cards with the same number directly perform inter-node communication. In dragonfly networking, a network interface card first communicates with a connected switch, and then performs inter-node communication with network interface cards with a same number through the switch. The plurality of network interface cards included in the server may form a plurality of communication planes. For example, each server in the communication system shown in FIG. 1a includes four network interface cards, so that four communication planes may be formed. A plurality of network interface cards of a single server may communicate in parallel. In other words, the plurality of communication planes may communicate in parallel.

Currently, when the symmetric collective communication is performed, although the plurality of communication planes may communicate in parallel, time domain features of traffic of a plurality of network interface cards included in a same server are almost the same. In this way, inter-node traffic on different communication planes forms in-phase superimposition. Consequently, peak traffic is gathered on some links, and network congestion is prone to occur. As a result, communication duration is long and communication performance is poor.

In view of this, an embodiment of this application provides a communication method that may be applied to a communication device. A process of constructing phase deflection of communication traffic, so that a phase difference is generated between inter-node traffic on different parallel communication planes, thereby balancing traffic on an entire network, reducing bandwidth load of local links, and reducing network congestion. This further reduces communication duration, improves bandwidth utilization of the entire network, and improves communication performance.

The communication method according to an embodiment of this application is mainly applied to a scenario of the symmetric collective communication in mesh networking.

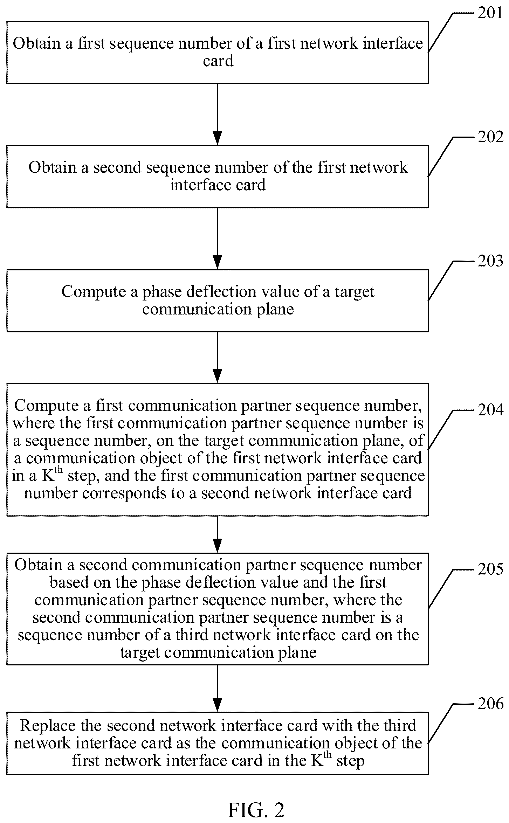

FIG. 2 is a diagram of an embodiment of a communication method according to an embodiment of this application. As shown in FIG. 2, the embodiment includes procedure 201 to procedure 206.

201: Obtain a first sequence number of a first network interface card.

EP 4 738 117 A1

The first network interface card is located in a target server. A communication device obtains the first sequence number of the first network interface card by obtaining an environment variable, reading a network interface card configuration, or the like. The first sequence number is a sequence number of the first network interface card in the target server. The target server includes N network interface cards. Sequence numbers of the N network interface cards in the target server are sequentially numbered from 0. For example, if the target server includes four network interface cards, sequence numbers of the four network interface cards in the target server are respectively 0, 1, 2, and 3.

The target server may communicate with another server in a communication system. Specifically, network interface cards with a same sequence number in servers form a communication plane, and the network interface cards on the same communication plane may communicate with each other. A sequence number corresponds to a network interface card in a server. Therefore, the network interface cards on a communication plane are from different servers. For example, the communication system includes four servers, and each server includes eight network interface cards. Network interface cards with a sequence number of 0 in the servers form a communication plane, and network interface cards with a number of 1 in the servers form another communication plane. The rest can be deduced by analogy. A plurality of communication planes may perform communication in parallel, and there are four network interface cards included on each communication plane. Sequence numbers of the network interface cards included on the communication plane are the same in respective servers. Therefore, the sequence number of the network interface card in the server is also a sequence number of the communication plane in the plurality of communication planes that communicate in parallel.

In other words, the N network interface cards included in the target server correspond to N communication planes, and each network interface card corresponds to one communication plane. A communication plane corresponding to the first network interface card is a target communication plane. The target communication plane includes M network interface cards, and the M network interface cards belong to different servers. In other words, the communication system includes at least M servers. Sequence numbers of the M network interface cards in respective servers are the same as the first sequence number, and a sequence number of the target communication plane is also the first sequence number. For example, if the sequence number of the first network interface card in the target server is 2, sequence numbers of other network interface cards on the target communication plane are also 2 in respective servers, and the sequence number of the target communication plane is also 2.

The M network interface cards on the target communication plane communicate with each other based on a target communication algorithm. The target communication algorithm may be a halving-doubling algorithm, a pairwise algorithm, or the like. The target communication algorithm includes a plurality of steps.

202: Obtain a second sequence number of the first network interface card.

Network interface cards are sequentially numbered from 0 on a communication plane to which the network interface cards belong. For example, the communication plane includes five network interface cards, and sequence numbers of the five network interface cards on the target communication plane are respectively 0, 1, 2, 3, and 4.

The target communication plane includes the M network interface cards, and sequence numbers of the M network interface cards on the target communication plane are 0 to M. The communication device obtains the second sequence number of the first network interface card by reading the network interface card configuration. The second sequence number is a sequence number of the first network interface card on the target communication plane.

203: Compute a phase deflection value of the target communication plane.

One network interface card corresponds to one communication plane. Therefore, the communication device can obtain a quantity of communication planes based on a quantity of network interface cards included in the target server. Then, the communication device obtains the sequence number of the target communication plane based on the first sequence number of the first network interface card.

The communication device uses the sequence number of the target communication plane as a deflection factor, and then obtains the phase deflection value θp of the target communication plane through computation based on the deflection factor, the quantity N of the communication planes, and the quantity M of the network interface cards included on the target communication plane. Specifically, the communication device computes the deflection value of the target communication plane according to the following formula:

$$\theta p = M/N * \text{First sequence number}$$

θp is rounded up. If a computation result is less than 1, θp is valued as 1.

For example, the target communication plane includes four network interface cards, and the target server also includes four network interface cards. The first sequence number of the first network interface card is 2. In this case, the phase deflection value θp of the target communication plane is 4 / 4 * 2 = 2.

204: Compute a first communication partner sequence number, where the first communication partner sequence number is a sequence number, on the target communication plane, of a communication object of the first network interface card in a K$^{th}$ step, and the first communication partner sequence number corresponds to a second network interface card.

The first network interface card communicates with other network interface cards on the target communication

8

plane based on the target communication algorithm. The communication device computes the communication object of the first network interface card in the $K^{th}$ step based on the sequence number (namely, the second sequence number) of the first network interface card on the target communication plane. The $K^{th}$ step is any step in the plurality of steps included in the target communication algorithm. Specifically, the communication device computes the first communication partner sequence number based on the second sequence number. The first communication partner sequence number is the sequence number of the communication object, on the target communication plane, of the first network interface card in the $K^{th}$ step. The first communication partner sequence number corresponds to the second network interface card, and is a sequence number of the second network interface card on the target communication plane. In other words, in the $K^{th}$ step, the first network interface card communicates with the second network interface card.

205: Obtain a second communication partner sequence number based on the phase deflection value and the first communication partner sequence number. The second communication partner sequence number is a sequence number of a third network interface card on the target communication plane.

A new communication object of the first network interface card in the $K^{th}$ step is obtained through performing phase deflection on the first communication partner sequence number. Specifically, the second communication partner sequence number is obtained through combining the phase deflection value of the target communication plane with the first communication partner sequence number. The second communication partner sequence number is a sequence number of the new communication object, on the target communication plane, of the first network interface card in the $K^{th}$ step. The second communication partner sequence number corresponds to the third network interface card, and is a signal of the third network interface card on the target communication plane.

206: Replace the second network interface card with the third network interface card as the communication object of the first network interface card in the $K^{th}$ step.

The communication device updates the communication object of the first network interface card in the $K^{th}$ step to the third network interface card.

In this embodiment, a phase deflection value of a communication plane is computed based on a quantity of network interface cards on the communication plane, a total quantity of communication planes, and a sequence number of the communication plane, and then a communication object of a network interface card is recomputed based on the phase deflection value of the communication plane, to generate a phase difference of traffic between two nodes on different communication planes. In this way, traffic on an entire network is balanced, bandwidth load of a single communication link is reduced, bandwidth utilization of the entire network is improved, congestion probability is reduced, and communication performance is improved.

In addition, this embodiment is applied to a mesh networking scenario, and networking costs may be reduced.

There are a plurality of target communication algorithms in an embodiment of this application, for example, the halving-doubling algorithm or the pairwise algorithm. Different target communication algorithms have different methods for computing the first communication partner sequence number and the second communication partner sequence number. Descriptions are separately provided below.

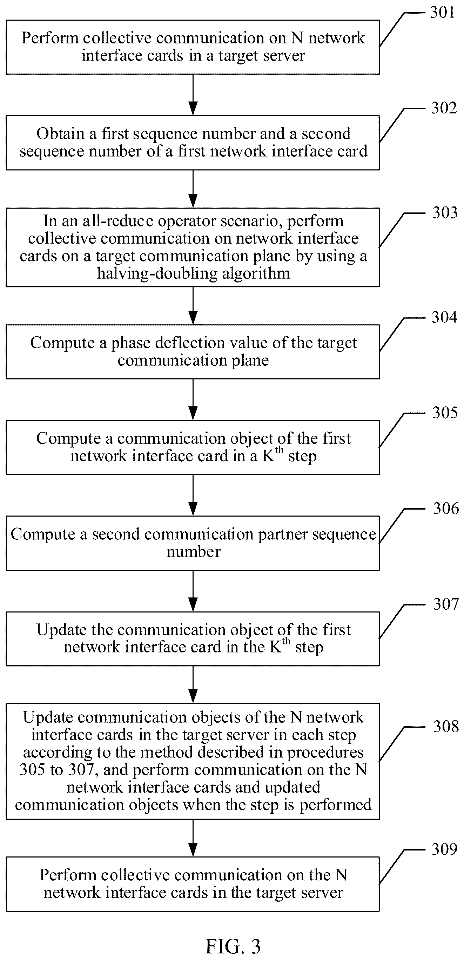

FIG. 3 is a diagram of another embodiment of a communication method according to an embodiment of this application. Inter-node communication is performed by using an all-reduce operator in the embodiment shown in FIG. 3. A used communication algorithm is a halving-doubling algorithm. The embodiment shown in FIG. 3 includes procedures 301 to 309.

301: Perform collective communication on N network interface cards in a target server.

Based on a characteristic of node interconnection between network interface cards, a reduce-scatter operator is used to perform the collective communication on the N network interface cards.

302: Obtain a first sequence number and a second sequence number of a first network interface card.

A communication device obtains the first sequence number of the first network interface card in the target server and the second sequence number of the first network interface card on a target communication plane by obtaining an environment variable, reading a network interface card configuration, or the like.

303: In an all-reduce operator scenario, perform collective communication on network interface cards on the target communication plane by using the halving-doubling algorithm.

The target communication plane includes M network interface cards. The halving-doubling algorithm generates $\log_2 M$ steps. For example, if the target communication plane includes four network interface cards, $\log_2 4 = 2$ steps are generated in a communication process.

304: Compute a phase deflection value of the target communication plane.

Procedure 304 in this embodiment is similar to procedure 203 in the embodiment shown in FIG. 2. Details are not described herein again.

305: Compute a communication object of the first network interface card in a $K^{th}$ step.

The communication device computes the communication object of the first network interface card in the $K^{th}$ step based on the second sequence number of the first network interface card and a quantity of steps. A sequence number of the communication object on the target communication plane is a first communication partner sequence number. The first communication partner sequence number corresponds to a second network interface card.

Specifically, the communication object of the first network interface card in the $K^{th}$ step is computed according to the following formula:

First communication partner sequence number = Second sequence number ^ (1 << ((K + First sequence number) % $\log_2 M$))

^ represents a bitwise exclusive OR operation, << represents a left shift operation, and % represents a modulo operation. Both the bitwise exclusive OR operation and the left shift operation are binary operations.

For example, the target communication plane includes four network interface cards. The first sequence number of the first network interface card is 2, the second sequence number is 3, and the first sequence number is the sequence number of the target communication plane. A total quantity of steps is $\log_2 4 = 2$, where K is a first step. In this case, (K + First sequence number) % $\log_2 M$ is (1+2) % 2 = 1, that is, a quantity of bits to be left shifted is 1. 10 is obtained through one-bit left shifting on a binary number of 1, and is equal to 2 through binary-to-decimal conversion. Therefore, the first communication partner sequence number is 3 ^ 2. A binary representation of 3 is 11. A binary representation of 2 is 10. A binary number obtained by 3 ^ 2 is 01, and is equal to 1 through binary-to-decimal conversion. In other words, a sequence number, on the target communication plane, of a communication object of the first network interface card in the first step is 1, and the sequence number 1 corresponds to the second network interface card.

306: Compute a second communication partner sequence number.

The communication device obtains the second communication partner sequence number through combining the phase deflection value of the target communication plane with the first communication partner sequence number. The second communication partner sequence number is a sequence number of a new communication object, on the target communication plane, of the first network interface card in the $K^{th}$ step.

Specifically, the new communication object of the first network interface card in the $K^{th}$ step is computed according to the following formula:

Second communication partner sequence number = (First communication partner sequence number + $\theta p$) % M

$\theta p$ is the phase deflection value of the target communication plane, M is a quantity of network interface cards on the target communication plane, and % is the modulo operation.

The descriptions in procedure 305 are used as an example. The target communication plane includes four network interface cards. The target server also includes four network interface cards. The first sequence number of the first network interface card is 2, the second sequence number is 3, and the first communication partner sequence number obtained through computation is 1. In this case, the phase deflection value $\theta p$ of the target communication plane is 4 / 4 * 2 = 2. Therefore, the second communication partner sequence number is (1 + 2) % 4 = 3, in other words, the sequence number, on the target communication plane, of the new communication object of the first network interface card in the $K^{th}$ step is 3.

307: Update the communication object of the first network interface card in the $K^{th}$ step.

The communication device searches the target communication plane for a network interface card whose sequence number is equal to the second communication partner sequence number, and determines that the second communication partner sequence number corresponds to a third network interface card. In other words, the third network interface card is the new communication object of the first network interface card in the $K^{th}$ step. The communication device replaces the second network interface card with the third network interface card as the communication object of the first network interface card in the $K^{th}$ step, and performs communication on the first network interface card and the third network interface card in the $K^{th}$ step.

308: Update communication objects of the N network interface cards in the target server in each step according to the method described in procedures 305 to 307, and perform communication on the N network interface cards and updated communication objects when the step is performed.

309: Perform collective communication on the N network interface cards in the target server.

After the N network interface cards complete performing a communication process of all steps, an all-gather operator is used to perform collective communication on the N network interface cards.

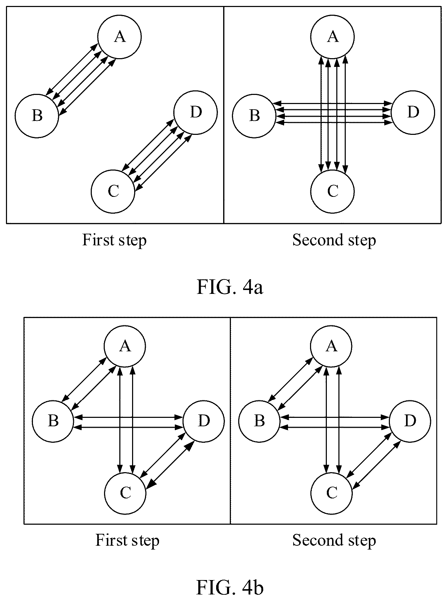

In the embodiment shown in FIG. 3, theoretical communication traffic features before and after update of a communication object are shown in FIG. 4a and FIG. 4b. In FIG. 4a and FIG. 4b, an example in which a communication system includes four servers and each server includes four network interface cards is used for description. When a halving-doubling algorithm is used, two steps are included. A line represents communication traffic between network interface cards.

FIG. 4a shows a theoretical communication traffic feature before replacement of a communication object (before construction of a phase deflection process). As shown in FIG. 4a, in a $1^{st}$ step, all four network interface cards of a server A communicate with four network interface cards of a server B, and all four network interface cards of a server C communicate with four network interface cards of a server D. Inter-node traffic concentrates on a communication link between the server A and the server B and a communication link between the server C and the server D, but other links are idle. In a 2nd step, all the four network interface cards of the server A communicate with the four network interface cards of the server C, and all the four network interface cards of the server B communicate with the four network interface cards of the server D. The inter-node traffic concentrates on a communication link between the server A and the server C and a communication link between server B and server D, but the other links are idle. In this case, the traffic concentrates on some links, and congestion is prone to occur.

FIG. 4b shows a theoretical communication traffic feature after replacement of a communication object (after construction of a phase deflection process). As shown in FIG. 4b, after the communication object is updated, communication objects of a server in two steps are both more than one. In this way, a quantity of links that can be simultaneously used is increased, inter-node communication traffic is more balanced, and a congestion probability is reduced. It is expected that a communication latency can be reduced by 20% in an all-reduce collective communication scenario.

In this embodiment, a process in which the halving-doubling algorithm is used to perform the inter-node communication in the all-reduce collective communication scenario is described, so that an application scenario of the solution is extended, and implementability of the solution is improved.

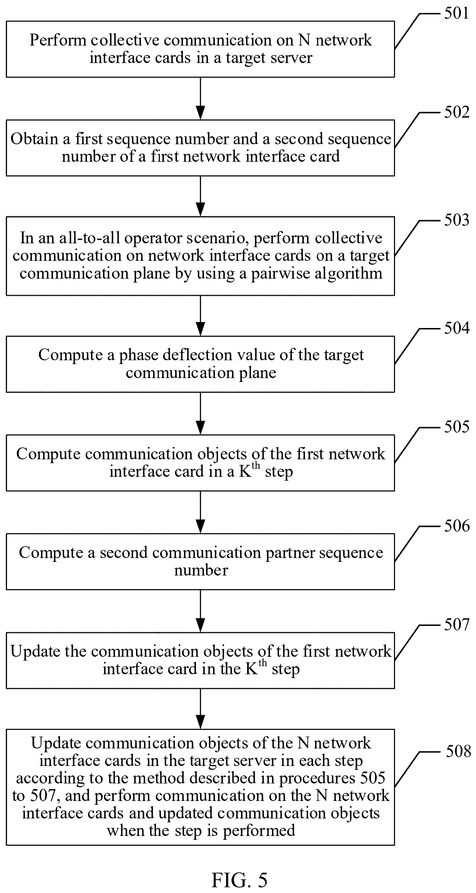

FIG. 5 is a diagram of another embodiment of a communication method according to an embodiment of this application. In the embodiment shown in FIG. 5, an all-to-all operator is used to perform inter-node communication, and a used communication algorithm is a pairwise algorithm. The embodiment shown in FIG. 5 includes procedures 501 to 508.

501: Perform collective communication on N network interface cards in a target server.

Based on a characteristic of node interconnection between network interface cards, the all-to-all operator is first used to perform the collective communication on the N network interface cards.

502: Obtain a first sequence number and a second sequence number of a first network interface card.

Procedure 502 in this embodiment is similar to procedure 302 in the embodiment shown in FIG. 3. Details are not described herein again.

503: In an all-to-all operator scenario, perform collective communication on network interface cards on a target communication plane by using the pairwise algorithm.

The target communication plane includes M network interface cards, and the pairwise algorithm generates M-1 steps. For example, if the target communication plane includes four network interface cards, 4 - 1 = 3 steps are generated in a communication process.

504: Compute a phase deflection value of the target communication plane.

Procedure 504 in this embodiment is similar to procedure 203 in the embodiment shown in FIG. 2. Details are not described herein again.

505: Compute communication objects of the first network interface card in a $K^{th}$ step.

In each step of the pairwise algorithm, each network interface card has two communication objects. The communication device computes the communication objects of the first network interface card in the $K^{th}$ step based on the second sequence number of the first network interface card. Sequence numbers of the communication objects on the target communication plane are a first communication partner sequence number. Because there are two communication objects, the first communication partner sequence number includes a third communication partner sequence number and a fourth communication partner sequence number. The first communication partner sequence number corresponds to a second network interface card, and the first communication partner sequence number includes the third communication partner sequence number and the fourth communication partner sequence number. Therefore, the second network interface card also includes two network interface cards: a fourth network interface card and a fifth network interface card. The third communication partner sequence number corresponds to the fourth network interface card, and the fourth communication partner sequence number corresponds to the fifth network interface card.

Specifically, the communication objects of the first network interface card in the $K^{th}$ step are computed according to the following formulas:

$$\text{Third communication partner sequence number} = (\text{Second sequence number} + M{-}K) \% M$$

$$\text{Fourth communication partner sequence number} = (\text{Second sequence number} + K) \% M$$

% represents a modulo operation.

For example, the target communication plane includes four network interface cards. The first sequence number of the first network interface card is 2, the second sequence number is 3, and the first sequence number is the sequence number of the target communication plane. A total quantity of steps is 4 - 1 = 3, where K is a first step. In this case, the third communication partner sequence number is (3 + 4 - 1) % 4 = 2, and the fourth communication partner sequence number is (3 + 1) % 4 = 0, that is, sequence numbers, on the target communication plane, of the communication objects of the first network interface card in the first step are 2 and 0. The sequence number 2 corresponds to the fourth network interface card, and the sequence number 3 corresponds to the fifth network interface card.

506: Compute a second communication partner sequence number.

The communication device obtains the second communication partner sequence number through combining the phase deflection value of the target communication plane with the first communication partner sequence number. The second communication partner sequence number is sequence numbers, on the target communication plane, of new communication objects of the first network interface card in the $K^{th}$ step. The first communication partner sequence number includes two sequence numbers. Therefore, the second communication partner sequence number obtained through adding the phase deflection value also includes two sequence numbers: a fifth communication partner sequence number and a sixth communication partner sequence number. The fifth communication partner sequence number is obtained through combining the third communication partner sequence number with the phase deflection value, and the fifth communication partner sequence number corresponds to a sixth network interface card. The sixth communication partner sequence number is obtained through combining the fourth communication partner sequence number with the phase deflection value, and the sixth communication partner sequence number corresponds to a seventh network interface card.

Specifically, the new communication objects of the first network interface card in the $K^{th}$ step are computed according to the following formulas:

Fifth communication partner sequence number = (Third communication partner sequence number + θp) % M Sixth communication partner sequence number = (Fourth communication partner sequence number + θp) % M

% represents the modulo operation.

The descriptions in procedure 505 are used as an example. The target communication plane includes four network interface cards. The target server also includes four network interface cards. The first sequence number of the first network interface card is 2, the second sequence number is 3, and K is the first step. The third communication partner sequence number obtained through computation is 2, and the fourth communication partner sequence number obtained through computation is 0. In this case, the phase deflection value θp of the target communication plane is 4 / 4 * 2 = 2. Therefore, the fifth communication partner sequence number is (3 + 2) % 4 = 1, and the sixth communication partner sequence number is (0 + 2) % 4 = 2, that is, sequence numbers, on the target communication plane, of the new communication objects of the first network interface card in the $K^{th}$ step are 1 and 2. The sequence number 1 corresponds to the sixth network interface card, and the sequence number 2 corresponds to the seventh network interface card.

It may be understood that the fourth network interface card and the seventh network interface card may be a same network interface card, and the fifth network interface card and the sixth network interface card may be a same network interface card. For example, in the foregoing example, the fourth network interface card and the seventh network interface card are a same network interface card. Alternatively, the fourth network interface card and the sixth network interface card may be a same network interface card, and the fifth network interface card and the seventh network interface card may be a same network interface card. For example, when the first sequence number is 0, and the phase deflection value is 0, an original communication object and a new communication object are a same network interface card.

507: Update the communication objects of the first network interface card in the $K^{th}$ step.

The communication device replaces the fourth network interface card with the sixth network interface card and replaces the fifth network interface card with the seventh network interface card as the communication object of the first network interface card in the $K^{th}$ step, and performs communication on the sixth network interface card and the seventh network interface card in the $K^{th}$ step.

508: Update communication objects of the N network interface cards in the target server in each step according to the method described in procedures 505 to 507, and perform communication on the N network interface cards and updated communication objects when the step is performed.

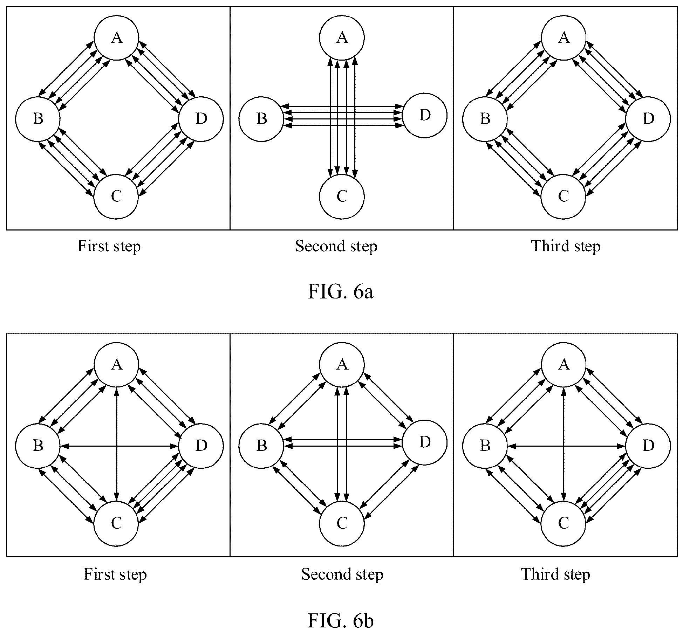

In the embodiment shown in FIG. 5, theoretical communication traffic features before and after update of a communication object are shown in FIG. 6a and FIG. 6b. In FIG. 6a and FIG. 6b, an example in which a communication system includes four servers and each server includes four network interface cards is used for description. When a pairwise algorithm is used, three steps are included. A line represents communication traffic between network interface cards.

FIG. 6a shows a theoretical communication traffic feature before replacement of a communication object (before construction of a phase deflection process). As shown in FIG. 6a, in the three steps, communication traffic all concentrates on some links, and some links are idle. In this case, congestion is prone to occur, and communication performance is affected.

FIG. 6b shows a theoretical communication traffic feature after replacement of a communication object (after construction of a phase deflection process). As shown in FIG. 6b, inter-node communication traffic after update of the communication object is more balanced than inter-node communication traffic before replacement of the communication object, and a quantity of links that can be simultaneously used is increased. In this way, a congestion probability is reduced, and communication performance is improved. It is expected that a communication latency can be reduced by 20% in an all-to-all collective communication scenario.

In this embodiment, a process in which the pairwise algorithm is used to perform inter-node communication in the all-to-all collective communication scenario is described, so that an application scenario of the solution is extended, and implementability of the solution is improved.

The foregoing describes embodiments of this application from a perspective of methods. The following describes a related device in embodiments of this application from a perspective of specific apparatus implementation.

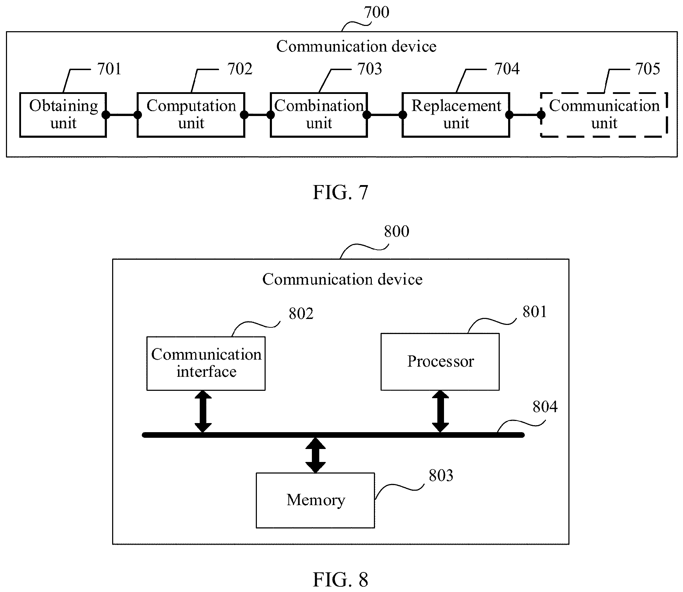

FIG. 7 is a diagram of a communication device 700 according to an embodiment of this application. The communication device 700 includes an obtaining unit 701, a computation unit 702, a combination unit 703, and a replacement unit 704.

The obtaining unit 701 is configured to obtain a first sequence number. The first sequence number is a sequence number of a first network interface card in a target server. The target server includes N network interface cards, and each of the N network interface cards corresponds to a communication plane. The first network interface card corresponds to a target communication plane. The target communication plane includes M network interface cards. The M network interface cards belong to different servers. Sequence numbers of the M network interface cards in respective servers are the same as the first sequence number. The M network interface cards communicate with each other based on a target communication algorithm. The target communication algorithm includes a plurality of steps.

The obtaining unit 701 is further configured to obtain a second sequence number. The second sequence number is a sequence number of the first network interface card on the target communication plane.

The computation unit 702 is configured to compute a phase deflection value of the target communication plane based on the first sequence number, a quantity of network interface cards included in the target server, and a quantity of network interface cards included on the target communication plane.

The computation unit 702 is further configured to compute a first communication partner sequence number based on the second sequence number. The first communication partner sequence number is a sequence number, on the target communication plane, of a communication object of the first network interface card in a $K^{th}$ step, and the first communication partner sequence number corresponds to a second network interface card.

The combination unit 703 is configured to combine the first communication partner sequence number with the phase deflection value, to obtain a second communication partner sequence number. The second communication partner sequence number is a sequence number of a third network interface card on the target communication plane.

The replacement unit 704 is configured to replace the second network interface card with the third network interface card as the communication object of the first network interface card in the $K^{th}$ step.

Optionally, the target communication algorithm is a halving-doubling algorithm, and the plurality of steps are $\log_2 M$ steps.

Optionally, the communication device 700 further includes a communication unit 705, configured to perform collective communication on the N network interface cards by using a reduce-scatter operator. The communication unit is further configured to perform collective communication on the N network interface cards by using an all-gather operator.

Optionally, the computation unit 702 is specifically configured to compute the first communication partner sequence number according to the following formula: First communication partner sequence number = Second sequence number ^ (1 << ((K + First sequence number) % $\log_2 M$)), where ^ represents a bitwise exclusive OR operation, << represents a left shift operation, and % represents a modulo operation.

Optionally, the target communication algorithm is a pairwise algorithm, and the plurality of steps are M-1 steps.

Optionally, the communication unit 705 is further configured to perform collective communication on the N network interface cards by using an all-to-all operator.

Optionally, the first communication partner sequence number includes a third communication partner sequence number and a fourth communication partner sequence number. The computation unit 702 is specifically configured to compute the third communication partner sequence number and the fourth communication partner sequence number based on the second sequence number. The third communication partner sequence number and the fourth communication partner sequence number are computed according to the following formulas: Third communication partner sequence number = (Second sequence number + M-K) % M, and Fourth communication partner sequence number = (Second sequence number + K) % M, where % represents modulo.

Units in the communication device 700 perform operations of the communication device according to embodiments shown in FIG. 2, FIG. 3, and FIG. 5. Details are not described herein again.

FIG. 8 is a diagram of a possible structure of a communication device 800 according to an embodiment of this application, and the communication device 800 includes a processor 801, a communication interface 802, a memory 803, and a bus 804. The processor 801, the communication interface 802, and the memory 803 are connected to each other through the bus 804. In this embodiment of this application, the processor 801 is configured to control and manage an action of the communication device. For example, the processor 801 is configured to perform procedures performed by the communication device according to the method embodiment shown in FIG. 2. The communication interface 802 is configured to support communication of the communication device. The memory 803 is configured to store program code and data of the communication device.

The processor 801 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 804 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of indication, the bus is represented by using only one bold line in FIG. 8. However, it does not indicate that there is only one bus or only one type of bus.

An embodiment of this application further provides a computer-readable storage medium. The computer-readable storage medium includes instructions. When the instructions are run on a computer, the computer is enabled to perform the methods according to embodiments shown in FIG. 2, FIG. 3, and FIG. 5.

An embodiment of this application further provides a computer program product including instructions. When the computer program product runs on a computer, the computer is enabled to perform the methods according to embodiments shown in FIG. 2, FIG. 3, and FIG. 5.

An embodiment of this application further provides a chip system. The chip system includes at least one processor and a communication interface. The communication interface and the at least one processor are interconnected through a line, and the at least one processor is configured to run a computer program or instructions, to perform the methods in embodiments shown in FIG. 2, FIG. 3, and FIG. 5.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the procedures of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A communication method, comprising:

obtaining a first sequence number, wherein the first sequence number is a sequence number of a first network interface card in a target server, the target server comprises N network interface cards, each of the N network interface cards corresponds to a communication plane, the first network interface card corresponds to a target communication plane, the target communication plane comprises M network interface cards, the M network interface cards belong to different servers, sequence numbers of the M network interface cards in respective servers are the same as the first sequence number, the M network interface cards communicate with each other based on a target communication algorithm, and the target communication algorithm comprises a plurality of steps;

obtaining a second sequence number, wherein the second sequence number is a sequence number of the first network interface card on the target communication plane;

computing a phase deflection value of the target communication plane based on the first sequence number, a quantity of network interface cards comprised in the target server, and a quantity of network interface cards comprised on the target communication plane;

computing a first communication partner sequence number based on the second sequence number, wherein the first communication partner sequence number is a sequence number, on the target communication plane, of a communication object of the first network interface card in a $K^{th}$ step, and the first communication partner sequence number corresponds to a second network interface card;

combining the first communication partner sequence number with the phase deflection value, to obtain a second communication partner sequence number, wherein the second communication partner sequence number is a sequence number of a third network interface card on the target communication plane; and

replacing the second network interface card with the third network interface card as the communication object of the first network interface card in the $K^{th}$ step.

2. The method according to claim 1, wherein the target communication algorithm is a halving-doubling algorithm, and the plurality of steps are $\log_2 M$ steps.

3. The method according to claim 2, wherein before the obtaining a first sequence number, the method further comprises:

performing collective communication on the N network interface cards by using a reduce-scatter operator; and
after the replacing the second network interface card with the third network interface card as the communication object of the first network interface card in the $K^{th}$ step, the method further comprises:
performing collective communication on the N network interface cards by using an all-gather operator.

4. The method according to claim 2 or 3, wherein the computing a first communication partner sequence number based on the second sequence number comprises:
performing computation according to the following formula:
First communication partner sequence number = Second sequence number ^ (1 << ((K + First sequence number) % $\log_2 M$)), wherein ^ represents a bitwise exclusive OR operation, << represents a left shift operation, and % represents a modulo operation.

5. The method according to claim 1, wherein the target communication algorithm is a pairwise algorithm, and the plurality of steps are M-1 steps.

6. The method according to claim 5, wherein before the obtaining a first sequence number, the method further comprises:
performing collective communication on the N network interface cards by using an all-to-all operator.

7. The method according to claim 5 or 6, wherein the first communication partner sequence number comprises a third communication partner sequence number and a fourth communication partner sequence number, and the computing a first communication partner sequence number based on the second sequence number comprises:

computing the third communication partner sequence number and the fourth communication partner sequence number based on the second sequence number, wherein
the third communication partner sequence number and the fourth communication partner sequence number are computed according to the following formulas:
Third communication partner sequence number = (Second sequence number + M-K) % M, and Fourth communication partner sequence number = (Second sequence number + K) % M, wherein % represents a modulo operation.

8. A communication device, comprising:

an obtaining unit, configured to obtain a first sequence number, wherein the first sequence number is a sequence number of a first network interface card in a target server, the target server comprises N network interface cards, each of the N network interface cards corresponds to a communication plane, the first network interface card corresponds to a target communication plane, the target communication plane comprises M network interface cards, the M network interface cards belong to different servers, sequence numbers of the M network interface cards in respective servers are the same as the first sequence number, the M network interface cards communicate with each other based on a target communication algorithm, and the target communication algorithm comprises a plurality of steps, wherein
the obtaining unit is further configured to obtain a second sequence number, wherein the second sequence number is a sequence number of the first network interface card on the target communication plane;
a computation unit, configured to compute a phase deflection value of the target communication plane based on the first sequence number, a quantity of network interface cards comprised in the target server, and a quantity of network interface cards comprised on the target communication plane, wherein
the computation unit is further configured to compute a first communication partner sequence number based on the second sequence number, wherein the first communication partner sequence number is a sequence number, on the target communication plane, of a communication object of the first network interface card in a $K^{th}$ step, and the first communication partner sequence number corresponds to a second network interface card;
a combination unit, configured to combine the first communication partner sequence number with the phase deflection value, to obtain a second communication partner sequence number, wherein the second communication partner sequence number is a sequence number of a third network interface card on the target communication plane; and
a replacement unit, configured to replace the second network interface card with the third network interface card as the communication object of the first network interface card in the $K^{th}$ step.

9. The communication device according to claim 8, wherein the target communication algorithm is a halving-doubling algorithm, and the plurality of steps are $\log_2 M$ steps.

10. The communication device according to claim 9, wherein the communication device further comprises:

a communication unit, configured to perform collective communication on the N network interface cards by using a reduce-scatter operator, wherein
the communication unit is further configured to:
perform collective communication on the N network interface cards by using an all-gather operator.

11. The communication device according to claim 9 or 10, wherein the computation unit is specifically configured to:
compute the first communication partner sequence number according to the following formula:
First communication partner sequence number = Second sequence number ^ (1 << ((K + First sequence number) % $\log_2 M$)), wherein ^ represents a bitwise exclusive OR operation, << represents a left shift operation, and % represents a modulo operation.

12. The communication device according to claim 8, wherein the target communication algorithm is a pairwise algorithm, and the plurality of steps are M-1 steps.

13. The communication device according to claim 12, wherein the communication unit is further configured to:
perform collective communication on the N network interface cards by using an all-to-all operator.

14. The communication device according to claim 12 or 13, wherein the first communication partner sequence number comprises a third communication partner sequence number and a fourth communication partner sequence number, and the computation unit is specifically configured to:

compute the third communication partner sequence number and the fourth communication partner sequence number based on the second sequence number, wherein
the third communication partner sequence number and the fourth communication partner sequence number are computed according to the following formulas:

Third communication partner sequence number = (Second sequence number + M-K) % M, and Fourth communication partner sequence number = (Second sequence number + K) % M, wherein % represents a modulo operation.

15. A communication device, comprising a processor and a memory, wherein

the memory is configured to store instructions; and
the processor is configured to execute the instructions stored in the memory, to implement the method according to any one of claims 1 to 7.

16. A computer-readable storage medium, storing a computer program, wherein when the computer program is executed by one or more processors, the method according to any one of claims 1 to 7 is implemented.

17. A computer program product comprising instructions, wherein when the computer program product is run on a computer, the computer is enabled to perform the method according to any one of claims 1 to 7.

FIG. 1a

FIG. 1b

Obtain a first sequence number of a first network interface card ⟋— 201

↓

Obtain a second sequence number of the first network interface card ⟋— 202

↓

Compute a phase deflection value of a target communication plane ⟋— 203

↓

Compute a first communication partner sequence number, where the first communication partner sequence number is a sequence number, on the target communication plane, of a communication object of the first network interface card in a $K^{th}$ step, and the first communication partner sequence number corresponds to a second network interface card ⟋— 204

↓

Obtain a second communication partner sequence number based on the phase deflection value and the first communication partner sequence number, where the second communication partner sequence number is a sequence number of a third network interface card on the target communication plane ⟋— 205

↓

Replace the second network interface card with the third network interface card as the communication object of the first network interface card in the $K^{th}$ step ⟋— 206

FIG. 2

Perform collective communication on N network interface cards in a target server — 301

↓

Obtain a first sequence number and a second sequence number of a first network interface card — 302

↓

In an all-reduce operator scenario, perform collective communication on network interface cards on a target communication plane by using a halving-doubling algorithm — 303

↓

Compute a phase deflection value of the target communication plane — 304

↓

Compute a communication object of the first network interface card in a $K^{th}$ step — 305

↓

Compute a second communication partner sequence number — 306

↓

Update the communication object of the first network interface card in the $K^{th}$ step — 307

↓

Update communication objects of the N network interface cards in the target server in each step according to the method described in procedures 305 to 307, and perform communication on the N network interface cards and updated communication objects when the step is performed — 308

↓

Perform collective communication on the N network interface cards in the target server — 309

FIG. 3

First step          Second step

FIG. 4a

First step          Second step

FIG. 4b

Perform collective communication on N network interface cards in a target server — 501

Obtain a first sequence number and a second sequence number of a first network interface card — 502

In an all-to-all operator scenario, perform collective communication on network interface cards on a target communication plane by using a pairwise algorithm — 503

Compute a phase deflection value of the target communication plane — 504

Compute communication objects of the first network interface card in a $K^{th}$ step — 505

Compute a second communication partner sequence number — 506

Update the communication objects of the first network interface card in the $K^{th}$ step — 507

Update communication objects of the N network interface cards in the target server in each step according to the method described in procedures 505 to 507, and perform communication on the N network interface cards and updated communication objects when the step is performed — 508

FIG. 5

First step  Second step  Third step

FIG. 6a

First step  Second step  Third step

FIG. 6b

700

Communication device

| 701 | 702 | 703 | 704 | 705 |
|---|---|---|---|---|
| Obtaining unit | Computation unit | Combination unit | Replacement unit | Communication unit |

FIG. 7

800

Communication device

802
Communication interface

801
Processor

804

803
Memory

FIG. 8

## INTERNATIONAL SEARCH REPORT

International application No.

**PCT/CN2024/081302**

| A. | CLASSIFICATION OF SUBJECT MATTER |
|---|---|

G06F9/50(2006.01)i;  G06N20/00(2019.01)i

According to International Patent Classification (IPC) or to both national classification and IPC

| B. | FIELDS SEARCHED |
|---|---|

Minimum documentation searched (classification system followed by classification symbols)

IPC: G06F G06N

Documentation searched other than minimum documentation to the extent that such documents are included in the fields searched

Electronic data base consulted during the international search (name of data base and, where practicable, search terms used)

CNTXT, ENTXT, CNKI, WPASB, ARXIV, BING, IEEE: AI, 人工智能, 神经网络, neural network, 计算, 集群, 节点, compute, cluster, node, Mesh, full mesh, dragonfly, 全规约, all-reduce, 全互换, all-to-all, all2all, 平面, plane, 拥塞, congest, having-doubling, pairwise, 相位, phase, 偏转, 偏移, offset, Deflection, 网卡, NIC, 替换, Replace

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 百度智能云开发者中心 (Non-official translation: BAIDU AI CLOUD DEVELOPER CENTER). "超大规模AI异构计算集群的设计和优化 (Non-official translation: SUPER-LARGE SCALE AI HETEROGENEOUS COMPUTING CLUSTER DESIGN AND OPTIMIZATION)" *BAIDU AI CLOUD, https://cloud.baidu.com/article/298969*, 15 June 2023 (2023-06-15), pages 9-10 | 1-17 |
| A | CN 113553190 A (ALIBABA CLOUD COMPUTING LTD. et al.) 26 October 2021 (2021-10-26) entire document | 1-17 |
| A | CN 116360972 A (HUAWEI TECHNOLOGIES CO., LTD.) 30 June 2023 (2023-06-30) entire document | 1-17 |
| A | US 2021240543 A1 (ALIBABA GROUP HOLDING LIMITED) 05 August 2021 (2021-08-05) entire document | 1-17 |

☑ Further documents are listed in the continuation of Box C.     ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 May 2024** | **04 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/081302** |

### C.    DOCUMENTS CONSIDERED TO BE RELEVANT

| Category* | Citation of document, with indication, where appropriate, of the relevant passages | Relevant to claim No. |
|---|---|---|
| A | WON, William et al. "TACOS: Topology-Aware Collective Algorithm Synthesizer for Distributed Training" *ArXiv:2304.05301v1, https://arxiv.org/pdf/2304.05301v1,* 11 April 2023 (2023-04-11), entire document | 1-17 |
| A | HOEFLER, Torsten et al. "HammingMesh: A Network Topology for Large-Scale Deep Learning" *ArXiv:2209.01346v2, https://arxiv.org/pdf/2209.01346,* 21 October 2022 (2022-10-21), entire document | 1-17 |
| A | MA, Junchao et al. "PAARD: Proximity-Aware All-Reduce Communication for Dragonfly Networks" *2021 IEEE Intl Conf on Parallel & Distributed Processing with Applications, Big Data & Cloud Computing, Sustainable Computing & Communications, Social Computing & Networking (ISPA/BDCloud/SocialCom/SustainCom),* 31 December 2021 (2021-12-31), entire document | 1-17 |

Form PCT/ISA/210 (second sheet) (July 2022)

**INTERNATIONAL SEARCH REPORT**
Information on patent family members

International application No.

**PCT/CN2024/081302**

| Patent document cited in search report | | | Publication date (day/month/year) | Patent family member(s) | | | Publication date (day/month/year) |
|---|---|---|---|---|---|---|---|
| CN | 113553190 | A | 26 October 2021 | None | | | |
| CN | 116360972 | A | 30 June 2023 | WO | 2023125493 | A1 | 06 July 2023 |
| US | 2021240543 | A1 | 05 August 2021 | US | 2023088237 | A1 | 23 March 2023 |
| | | | | US | 11520640 | B2 | 06 December 2022 |
| | | | | CN | 113204423 | A | 03 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310957997